(19) Europäisches Patentamt / European Patent Office / Office européen des brevets

(11) **EP 2 166 430 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
*G06F 1/26* (2006.01)      *H04B 3/54* (2006.01)
*H04L 12/40* (2006.01)

(21) Anmeldenummer: **08016053.4**

(22) Anmeldetag: **11.09.2008**

(54) **Busanschaltung zur Ankopplung eines Feldgerätes an einen Feldbus**

Bus interface for coupling a field device to a field bus

Raccordement de bus destiné au couplage d'un appareil de terrain sur un bus de terrain

(84) Benannte Vertragsstaaten:
**DE ES FR GB IT**

(43) Veröffentlichungstag der Anmeldung:
**24.03.2010 Patentblatt 2010/12**

(73) Patentinhaber: **VEGA Grieshaber KG**
**77709 Wolfach (DE)**

(72) Erfinder: **Wöhrle, Siegbert**
**77761 Schiltach (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**WO-A-96/04735      US-A1- 2008 174 178**

**Beschreibung**

Die Erfindung betrifft eine Busanschaltung zur Ankopplung eines Feldgerätes an einen Feldbus gemäß Patentanspruch 1.

In der Prozessautomatisierung und Prozesssteuerung werden sogenannte Feldgeräte eingesetzt, die im Prozessablauf Prozessvariablen, bspw. mittels Sensoren messen oder Regelgrößen mittels Aktuatoren steuern.

Dabei kommen als Sensoren verschiedene Arten von in der Mess- und Regeltechnik eingesetzten Messgeräten, wie z. B. Druck-, Temperatur-, Durchfluss- und Füllstandsmessgeräte zum Einsatz. Die von diesen Messgeräten gelieferten Messsignale werden in der Regel an eine übergeordnete Leit- oder Steuerzentrale weitergeleitet, wobei die Signalübertragung in digitaler Form zwischen dem Feldgerät und der Leit- oder Steuerzentrale über einen Datenbus erfolgt. Zum Einsatz kommen dabei Feldbusse wie PROFIBUS, ETHERNET oder Fieldbus Foundation.

Die Busanbindung erfolgt durch Busanschaltungen oder Anschlussschaltungen, die mit speziellen Schaltkreisen, sogenannten Transceivern (Medium Attachment Unit) die für die Kommunikation über den Feldbus notwendigen Sende- und Empfangsfunktionen übernehmen, insbesondere eine Pegelanpassung vornehmen.

Solche Transceiver werden in der Regel mit Mikroprozessoren, ASIC's oder durch FPGA's realisiert. So bietet bspw. die Firma Siemens einen ASIC-Schaltkreis SIM 1 an, mit dem mit wenigen externen Bauelementen Feldgeräte an einen Feldbus, insbesondere an einen PROFIBUS anschaltbar sind. Die dermaßen angeschlossenen Feldgeräte umfassen neben dem analogen Sensorteil einen Mikroprozessor (Anwendungs-Controller) für die Steuerung der Anwendung und einen Slave-Controller als Prozess-Controller für die Steuerung der Busanbindung.

Häufig werden die Feldgeräte nicht an eine externe Spannungsquelle angeschlossen, sondern werden über die Datenbusleitung gespeist (busgespeist), d. h. die Busspannung liegt als Eingangsspannung an der Busanschaltung. Die Druckschriften US 2008/174 178 A1 und WO 96/04 735 offenbaren solche Anordnungen.

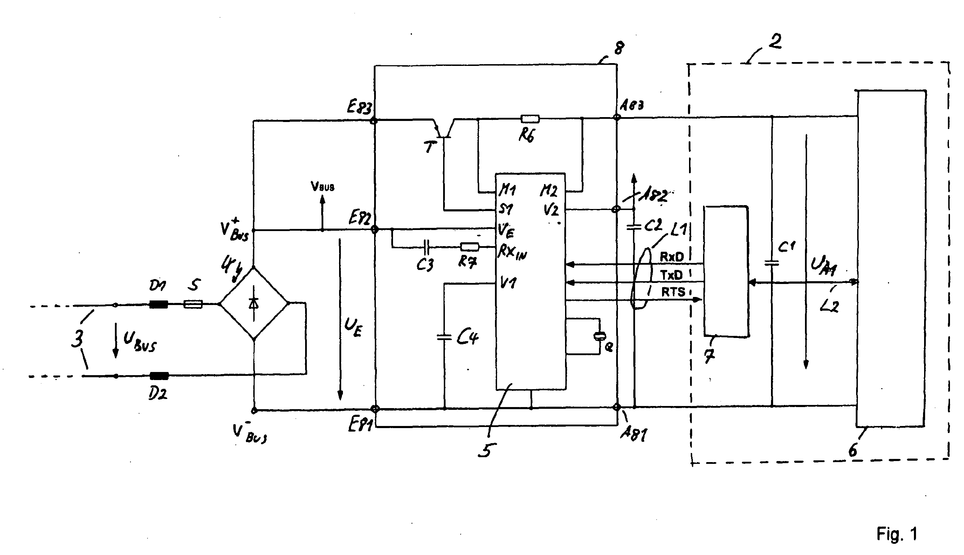

Eine mit dem zuvor erwähnten ASIC-Schaltkreis SIM1 (SIMATIC NET)aufgebaute, busgespeiste Busanschaltung zeigt Figur 1, die ein Feldgerät 2 an einen Feldbus 3, hier ein PROFIBUS anschaltet.

Zur Anbindung des Feldgerätes 2 an den Feldbus 3 ist nach Figur 1 ein Kopplungs- und Spannungsregelschaltkreis 8 über eine Gleichrichterbrücke 4 an den zweiadrigen PROFIBUS 3, im folgenden Feldbus genannt, angeschlossen. Zwischen der Gleichrichterbrücke 4 und jeweils einer Ader des Feldbusses 3 ist eine Netzdrossel D1 und eine Sicherung S seriell bzw. eine Netzdrossel D2 geschaltet. Die Busspannung $U_{Bus}$ stellt bspw. ein Segmentkoppler (nicht dargestellt)zur Verfügung und umfasst bspw. einen Spannungsbereich von 9V bis 32V.

Der Kopplungs- und Spannungsregelschaltkreis 8 ist mit dem Feldgerät 2 über Datenleitungen L1 zur Übermittlung der RxD-, TxD- und RTS-Daten verbunden. Das Feldgerät 2 besteht aus einem Digitalteil 7, an dem die Datenleitung L1 angeschlossen ist, und einem Sensorteil 6, der, wie eingangs erläutert, die Funktion eines Messgerätes übernimmt und über einen Datenbus L2 mit dem Digitalteil 7 verbunden ist.

Der oben erwähnte ASIC-Schaltkreis SIM1 der Firma Siemens, im folgenden Schaltkreis 5 genannt, übernimmt in dem Kopplungs- und Spannungsregelschaltkreis 8 die Kommunikation zwischen dem Digitalteil 7 des Feldgerätes 2 und dem Feldbus 3 und stellt zusätzlich mehrere Versorgungsspannungen für lokale Verbraucher, insbesondere für den Digital- und den Sensorteil 7 und 6 zur Verfügung, wobei die an der Gleichrichterbrücke abgegriffene Busspannung $U_{Bus}$ dem Schaltkreis 5 als Versorgungsspannung dient. Das negative Buspotential $V^-_{Bus}$ wird über den Eingang E81 des Kopplungs- und Spannungsregelschaltkreises 8 dem Schaltkreis 5 zugeführt, das positive Buspotential $V^+_{Bus}$ wird über einen Eingang E82 des Kopplungs- und Spannungsregelschaltkreises 8 zur Spannungsversorgung einem Eingang $V_E$ des Schaltkreises 5 und über einen Kondensator C3 und einen Widerstand R7 zur Einkopplung eines Feldbus-Empfangssignals einem Eingang $RX_{IN}$ des Schaltkreises 5 zugeführt. Ferner wird einem aus einem Bipolar-Transistor T und einem Messwiderstand R6 bestehenden Längsregler über einen Eingang E83 des Kopplungs- und Spannungsregelschaltkreises 8 das positive Buspotential $V^+_{Bus}$ zugeführt und von dem Schaltkreis 5 auf eine konstante Betriebsspannung $U_{A1}$, vorzugsweise auf 6,3V geregelt. Hierzu wird aus dem den Messeingängen M1 und M2 des Schaltkreises 5 zugeführten Spannungsabfall des Messwiderstandes R6 ein Steuersignal zur Ansteuerung der Basis-Elektrode des Transistors T erzeugt. Die an Ausgängen A81 und A83 des Kopplungs- und Spannungsregelschaltkreises 8 zur Verfügung stehende Betriebsspannung $U_{A1}$ wird mit einem Kondensator C1 gestützt.

Zusätzlich stehen an den Ausgängen V1 und V2 des Schaltkreises geregelte Versorgungspannungen von 3V und 5V für externe Verbraucher zur Verfügung, die jeweils mit einem Kondensator C2 bzw. C4 gestützt werden.

In dieser Applikation gemäß Figur 1 ist die geregelte Betriebsspannung $U_{A1}$ von 6,3V so gewählt, dass bei kleinster Busspannung $U_{Bus}$ von 9V eine sichere Modulation des Feldbus-Signals möglich ist. Da die Feldbusspannung $U_{Bus}$ einen Wertebereich von 9V bis 32V umfasst, fällt bei höherer Busspannung $U^-_{Bus}$ als 9V der Rest am Längsregler (T, R6) ab und wird in Wärme umgesetzt. In der Praxis hat sich herausgestellt, dass meist deutlich höhere Busspannungen $U_{Bus}$ als 9V auftreten.

Der Erfindung liegt daher die Aufgabe zugrunde, eine Busanschaltung der eingangs genannten Art mit möglichst wenig elektrischen Verlusten bereitzustellen.

Diese Aufgabe wird gelöst durch eine Busanschaltung mit den Merkmalen des Patentanspruches 1.

Eine solche Busanschaltung mit einem Schaltkreis zum Senden und Empfangen von Datenbussignalen sowie zur Erzeugung von wenigstens einer aus der Busspannung abgeleiteten, geregelten Betriebsspannung umfasst erfindungsgemäß einen steuerbaren Widerstand zur Erzeugung einer weiteren Betriebsspannung sowie Schaltungsmittel, die den steuerbaren Widerstand in Abhängigkeit der Busspannung derart ansteuern, dass die Eingangsspannung des Schaltkreises auf dessen mindestens notwendige Versorgungsspannung geregelt wird, wobei dem Feldgerät die Summe aus der geregelten Betriebsspannung und der weiteren Betriebsspannung als Versorgungsspannung zugeführt wird.

Damit wird der Schaltkreis nicht mehr mit der gesamten Busspannung belastet, sondern nur mit der mindestens erforderlichen Versorgungsspannung, so dass vergleichsweise minimale Verluste erzeugt werden, die auch durch die zusätzlichen Schaltungsmittel noch erheblich unterschritten werden.

Mit dieser erfindungsgemäßen Busanschaltung wird die gesamte Busspannung, abzüglich einer für die Signal-Modulation erforderlichen Restspannung am Längsregler und der Verlustspannung der Eingangsbeschaltung (Gleichrichter, Sicherung und Netzdrosseln), als Versorgungsspannung für das Feldgerät bzw. für die Funktionseinheiten (Digitalteil, Sensorteil usw.) des Feldgerätes genutzt, wodurch eine große Variabilität hinsichtlich der Verwendung der Funktionseinheiten des Feldgerätes, insbesondere des zu verwendenden Messgerätes als Sensorteil, besteht.

In einer Weiterbildung der Erfindung ist ein Operationsverstärker als Schaltungsmittel vorgesehen, dem eine aus der Busspannung abgeleitete Referenzspannung zur Einstellung der mindestens erforderlichen Versorgungsspannung für den Schaltkreis zugeführt wird, wobei sich die Referenzspannung vorzugsweise auf ein Potential der Busspannung bezieht und vorzugsweise an einer Referenz-Diode erzeugt wird. Damit steht ein Standartbauelement zur Verfügung, mit dem eine kostengünstige Regelung der Versorgungsspannung für den Schaltkreis ermöglicht wird.

In einer anderen Weiterbildung der Erfindung bezieht sich die Referenzspannung auf das Bezugspotential bzw. Massepotential des Schaltkreises, wodurch es möglich ist, einen Standard-Operationsverstärker einzusetzen, mit der Folge, weiter die Aufbaukosten für die erfindungsgemäße Busanschaltung zu senken. Vorzugsweise wird die Referenzspannung bei dieser Weiterbildung an einer Referenz-Diode abgegriffen.

In einer Weiterbildung der Erfindung sind Schaltungsmittel, vorzugsweise eine Z-Diode vorgesehen, die die Versorgungsspannung des Operationsverstärkers auf einen sinnvollen Spannungswert begrenzt, da damit ein vergleichsweise kostengünstiger Standard-Operationsverstärker einsetzbar ist. Die Versorgungsspannung kann auf einen solchen Wert eingestellt werden, dass der Operationsverstärker nicht übersteuert wird.

In einer anderen Weiterbildung der Erfindung wird als steuerbarer Widerstand ein Bipolar-Transistor oder ein Feldeffekttransistor (FET) eingesetzt, die als kostengünstige Bauteile zur Verfügung stehen.

In Anpassung der weiteren Betriebsspannung an den Versorgungspannungsbereich des Feldgerätes bzw. an dessen Funktionseinheiten, wird diese mittels Schaltmitteln, vorzugsweise einer Z-Diode, auf einen entsprechend sinnvollen Spannungsbereich begrenzt.

Vorzugsweise ist ein Feldgerät aus einem Digitalteil und einem Sensorteil aufgebaut, der Digitalteil umfasst bspw. einen Pegelwandler und einen Step-Down-Wandler.

Die Erfindung wird nachfolgend anhand von Ausführungsbeispielen unter Bezugnahme auf die beigefügten Figuren ausführlich beschrieben. Es zeigen:

Figur 1    ein Schaltbild einer bekannten Busanschaltung mit ei- nem die Funktion eines Transceivers umfassenden Schalt- kreis,

Figur 2    ein Schaltbild einer Ausführungsform der erfindungsge- mäßen Busanschaltung,

Figur 3    ein Schaltbild einer weiteren Ausführungsform der er- findungsgemäßen Busanschaltung, und

Figur 4    ein Schaltbild mit der erfindungsgemäßen Busanschal- tung gemäß Figur 3 mit einem Digitalteil eines Feldge- rätes.

Figur 1 zeigt die eingangs hinsichtlich Aufbau und Funktion beschriebene bekannte Busanschaltung, die mit einem Kopplungs- und Spannungsregelschaltkreis 8 aufgebaut ist, der einen Schaltkreis 5 für die Sende- und Empfangsfunktionen sowie für die Erzeugung einer geregelten Betriebsspannung $U_{A1}$ umfasst.

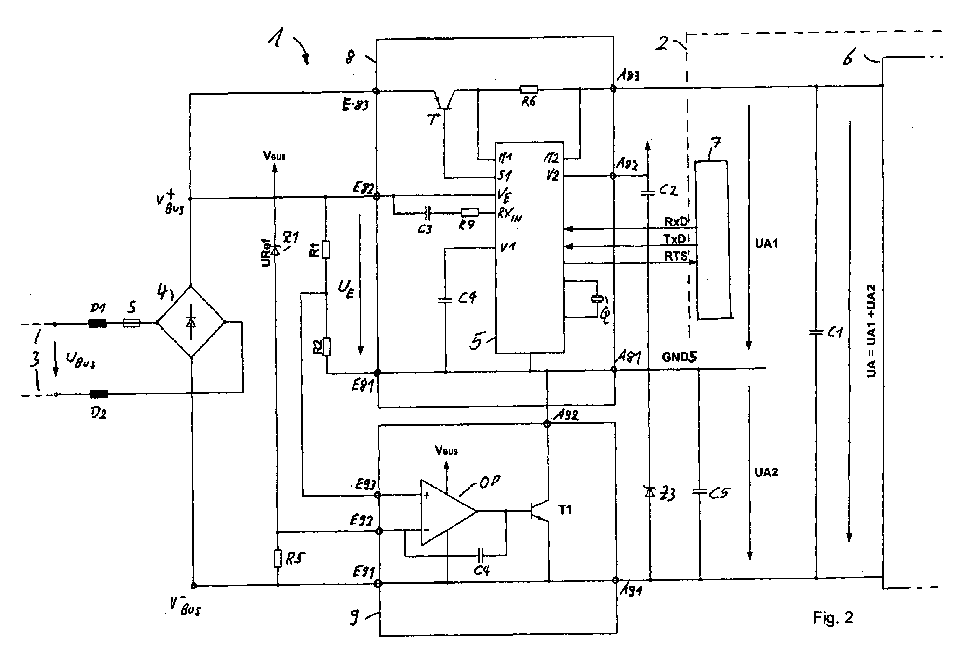

Figur 2 zeigt ein Ausführungsbeispiel der erfindungsgemäßen Busanschaltung 1 mit einem Kopplungs- und Spannungsregelschaltkreis 8, der hinsichtlich Aufbau und Funktion demjenigen nach Figur 1 entspricht. Auch das der Busanschaltung 1 nachgeschaltete Feldgerät 2 entspricht in Aufbau und Funktion dem in Figur 1 beschriebenen Feldgerät 2.

Im Folgenden werden daher nur die erfindungswesentlichen Teile des Ausführungsbeispiels in ihrem Aufbau und ihrer Funktion beschrieben.

Nach Figur 2 wird mittels einer einen Operationsverstärkers OP aufweisenden Regelschaltung 9 die Eingangsspannung $U_E$ des Schaltkreises 5 auf dessen mindestens erforderliche Versorgungsspannung geregelt. Hierzu steuert der Ausgang des Operationsverstärkers OP die Basis-Elektrode eines Bipolar-Transistors T1 an, dessen Emitter-Kollektorstecke einerseits über einen Ausgang A92 mit dem Bezugspotential GND5 (entspricht dem Potential des Einganges E81 und des Ausganges A81 des Kopplungs- und Spannungsregelschaltkreis 8) verbunden ist und andererseits zusammen mit einem Ausgang A91 und einem Eingang E91 der Regelschaltung 9 auf dem negativen Potential $V^-_{Bus}$ der Busspannung $U_{Bus}$ liegt. In Abhängigkeit der Steuerung des Transistors T1 durch den Operationsverstärker OP liegt zusätzlich zur geregelten Betriebsspannung $U_{A1}$ an den Ausgängen A92 und A91 der Regelschaltung 9 eine weitere Betriebsspannung $U_{A2}$ an, so dass an den Ausgängen A83 und A91 die Summe $U_{A1}+U_{A2}$ dieser beiden Betriebsspannungen $U_{A1}$ und $U_{A2}$ zur Verfügung steht, die im Folgenden als Versorgungsspannung $U_A$ bezeichnet wird.

Sowohl die weitere Betriebsspannung $U_{A2}$ als auch die Versorgungsspannung $U_A$ für das Feldgerät 2 ist mit einem Kondensator C5 bzw. C1 gestützt.

Der Ausgang des Operationsverstärkers OP ist zusätzlich über einen Kondensator C4 auf dessen invertierenden Eingang zurückgekoppelt und erhält als Betriebsspannung nahezu die gesamte Busspannung $U_{Bus}$ (abzüglich der Verluste an der Gleichrichterbrücke 4, der Sicherung S und den Netzdrosseln D1 und D2).

Zur Erzeugung einer für die Regelung der Eingangsspannung $U_E$ erforderlichen Referenzspannung $U_{Ref}$ wird der invertierende Eingang des Operationsverstärkers OP über einen Eingang E92 der Regelschaltung 9 an einen Verbindungsknoten der Serienschaltung aus einer Referenz-Diode Z1 und einem Widerstand R5 angeschlossen, wobei die Kathode der Referenz-Diode Z1 mit dem positiven Potential $V^+_{Bus}$ der Busspannung $U_{Bus}$ und das freie Ende des Widerstands R5 mit dem negativen Potential $V^-_{Bus}$ der Busspannung $U_{Bus}$ verbunden ist. Der nicht-invertierende Eingang des Operationsverstärkers OP ist über einen Eingang E93 der Regelschaltung 9 mit einem Spannungsabgriff eines Spannungsteilers aus Widerständen R1 und R2 verbunden, an dem die Eingangsspannung $U_E$ für den Schaltkreis 5 über seine beiden Eingänge E81 und E82 anliegt.

Die Referenz-Diode Z1 ist so gewählt, dass am invertierenden Eingang des Operationsverstärkers OP eine Referenzspannung von -2,5V bezogen auf das positive Potential $V^+_{Bus}$ der Busspannung $U_{Bus}$ anliegt. Aufgrund einer Differenzspannung an den beiden Eingängen des Operationsverstärkers OP wird ein an dessen Ausgang angeschlossener Bipolar-Transistor T1 über dessen Basis-Elektrode so gesteuert, bis im ausgeregelten Zustand auch an dessen nicht-invertierenden Eingang ein dem Wert der Referenzspannung $U_{Ref}$ entsprechender Wert anliegt.

Werden für die beiden den Spannungsteiler bildenden Widerstände R1 und R2 die Werte 100kΩ und 221kΩ gewählt, ergibt sich für die Eingangsspannung $U_E$ des Schaltkreises 5 gemäß folgender Formel

$$U_E = U_{Ref} \times (R1+R2)/R1,$$

ein Spannungswert von 8,025V. Der Transistor T1 wird somit derart gesteuert, dass sich am Spannungsteiler R1/R2, also am Eingang E81/E82 des Schaltkreises 5, eine Eingangsspannung $U_E$ von 8,025V einstellt.

Bei einer Busspannung $U_{Bus}$ von bspw. 20V und einem Spannungsabfall von ca. 1V über der Eingangsbeschaltung (Gleichrichter 4, Sicherung S und Netzdrosseln D1 und D2)ergibt sich für die weitere Betriebsspannung $U_{A2}$ mit $U_{A2}$= 20V-8,025V-1V ein Spannungswert von ca. 11V.

Da der Schaltkreis 5, wie anhand der Figur 1 erläutert, über den Längsregler, der durch den Transistor T und den Widerstand R6 gebildet wird, das positive Potential $V^+_{Bus}$ der Busspannung $U_{Bus}$ auf einen konstanten Wert von 6,3V regelt, der der geregelten Betriebsspannung $U_{A1}$ an den Ausgängen A83 und A81 des Kopplungs- und Spannungsregelschaltkreises 8 entspricht, ergibt sich als Versorgungsspannung $U_A$ für das Feldgerät 2 bzw. für dessen Funktionseinheiten 7 und 6 gemäß $U_A$= $U_{A1}+U_{A2}$=6, 3V+11V ein Spannungswert von 17,3V.

Um die weitere Betriebsspannung $U_{A2}$ auf einen an das Feldgerät 2 bzw. dessen Funktionskomponenten angepassten Wert zu begrenzen, wird an die Ausgänge A92 und A91 der Regelschaltung 9 eine Z-Diode Z3 angeschlossen.

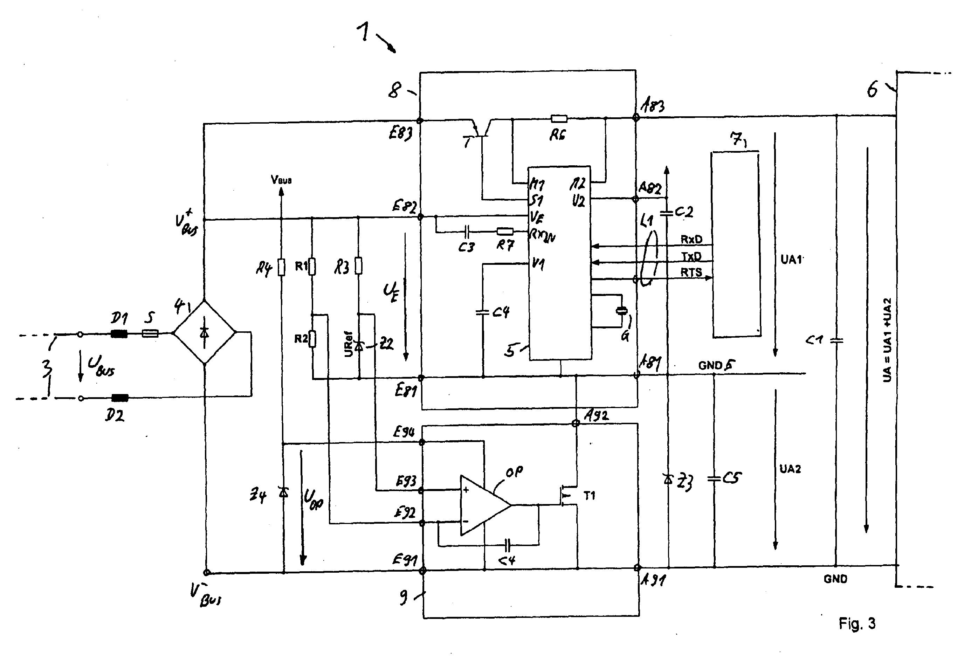

Die erfindungsgemäße Busanschaltung 1 nach Figur 3 unterscheidet sich von derjenigen nach Figur 2 lediglich in der Erzeugung der Referenzspannung $U_{Ref}$ und hinsichtlich der Höhe der Versorgungsspannung des Operationsverstärkers.

Nach Figur 2 liegt die gesamte Busspannung $U_{Bus}$ (abzüglich des Spannungsabfalles der Eingangsbeschaltung) als Versorgungsspannung an dem Operationsverstärker OP der Regelschaltung 9, somit wäre ein Operationsverstärker erforderlich, der für den Spannungsbereich von 9V bis 32V der Busspannung $U_{Bus}$ geeignet wäre. Nach Figur 3 wird daher die Versorgungsspannung des Operationsverstärkers OP mittels einer Z-Diode Z4, in Abstimmung mit der Referenz-Diode Z2 und de Z-Diode Z3, auf einen Wert begrenzt, so dass die Eingänge E92 und E93 des Operationsverstärkers OP nicht übersteuert werden. Hierzu wird ein Eingang E94 der Regelschaltung 9, der mit einem Betriebsanschluss des Operationsverstärkers OP verbunden ist, an einen Verbindungsknoten einer Reihenschaltung aus einer Z-Diode Z4 und einem Widerstand R4 angeschlossen, wobei die Anode der Z-Diode Z4 auf dem negativen Potential $V^-_{Bus}$ der Busspannung $U_{Bus}$ und das freie Ende der Reihenschaltung des Widerstandes R4 auf dem positiven Potential Potential $V^-_{Bus}$ der Busspannung $U_{Bus}$ liegt. Damit lässt sich ein kostengünstiger Standart-Operationsverstärker für die Regelschaltung 9 einsetzen.

Nach Figur 3 bezieht sich die Referenzspannung $U_{Ref}$ für den Operationsverstärker OP nicht mehr auf die Busspannung $U_{Bus}$, sondern auf das Bezugspotential GND5 des Schaltkreises 5. Hierzu wird der invertierende Eingang des Operationsverstärkers OP über den Eingang E92 der Regelschaltung 9 mit dem Spannungsteiler R1/R2 verbunden, während eine Reihenschaltung einer Referenz-Diode Z2 mit einem Widerstand R3 zwischen dem positiven Potential $V^+_{Bus}$ der Busspannung $U_{Bus}$ und dem Bezugspotential des Schaltkreises 5 liegt. Die Referenzspannung $U_{Ref}$ wird an dem Verbindungsknoten der Reihenschaltung aus der Referenz-Diode Z2 und dem Widerstand R3 abgegriffen und auf den nicht-invertierenden Eingang der Operationsverstärkers OP über den Eingang E93 der Regelschaltung 9 gelegt.

Durch Einsatz eines Feldeffekttransistors (FET) T1 anstelle eines Bipolar-Transistors, kann der Stromverbrauch der Regelschaltung 9 klein gehalten werden, da dieser zur Ansteuerung keinen Strom benötigt. Dadurch kann auch die zusätzliche Busbelastung klein gehalten werden.

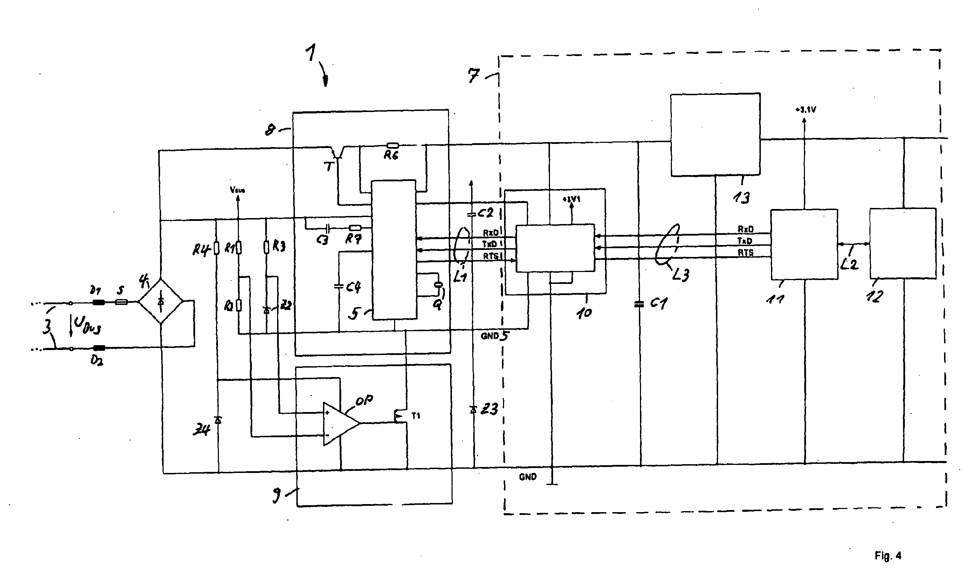

Figur 4 zeigt eine Busanschaltung 1 gemäß Figur 3 mit einem an diese Busanschaltung 1 nachgeschalteten Digitalteil 7 eines Feldgerätes gemäß den Figuren 2 oder 3. Dieser Digitalteil 7 besteht aus einem Pegelwandler 10, der einerseits mit den Datenleitungen L1 mit dem Schaltkreis 5 und über die Datenleitungen L3 mit einem nachgeschalteten Slave-Controller 11 als Prozess-Controller verbunden ist. Diesem Slave-Controller 11 ist über einen Datenbus L2 ein Mikroprozessor 12 als Anwendungs-Controller nachgeschaltet. Der Pegelwandler 10 wird über die Ausgänge A91 und A83 (siehe Figur 3) mit der Versorgungsspannung $U_A$, die sich aus der Summe der geregelten Betriebsspannung $U_{A1}$ und der weiteren Betriebsspannung $U_{A2}$ zusammensetzt, versorgt, während der Slave-Controller 11 und der Mikroprozessor 12 mit einer gegenüber der Versorgungsspannung $U_A$ kleineren Spannung gespeist wird, die von einem Step-Down-Wandler 13 aus der Versorgungsspannung $U_A$ erzeugt wird. Beträgt bspw. die Versorgungsspannung $U_A$ 17V, erzeugt der Step-Down-Wandler 13 hieraus für den Slave-Controller 11 und den Mikroprozessor 12 eine Betriebsspannung von 3,1V. Damit kann die Verlustleistung des Digitalteils 7 gering gehalten werden. Da diese Einheiten 11 und 12 auf einem anderen Potential liegen, ist für die Datenkommunikation der Pegelwandler 10 erforderlich. Nach Figur 4 wird an den Pegelwandler 10 auch das Bezugspotential GND5 des Schaltkreises 5 angelegt und über den Ausgang A82 (siehe Figur 3) die von dem Schaltkreis 5 erzeugte 3V-Versorgungsspannung zugeführt.

Bezugszeichenliste

1    Busanschaltung
2    Feldgerät
3    Feldbusleitungen
4    Gleichrichterbrücke
5    Schaltkreis
6    Sensorteil des Feldgerätes 2
7    Digitalteil des Feldgerätes 2
8    Kopplungs- und Spannungsregelschaltkreis
9    Regelschaltung

10    Pegelwandler
11    Slave-Contoller
12    Mikroprozessor
13    Step-Down-Wandler

A81 - A83    Ausgänge des Kopplungs- und Spannungsregelschalt- kreises 8
A91, A92    Ausgänge der Regelschaltung 9

C1 - C5    Kondensatoren
D1, D2    Dioden

E81 - E83    Eingänge des Kopplungs- und Spannungsregelschalt- kreises 8
E91 - E94    Eingänge der Regelschaltung 9

GND    Bezugspotential der Busanschaltung 1
GND5    Bezugspotential des Schaltkreises 5

L1, L2, L3    Datenleitungen

M1, M2    Messeingänge des Schaltkreises 5

OP    Operationsverstärker
Q    Quarz

R1 - R7    Widerstände
$RX_{IN}$    Dateneingang des Schaltkreises 5

S    Sicherung
S1    Steuerausgang des Schaltkreises 5

T, T1    Transistoren

$U_{Bus}$    Feldbusspannung
$U_E$    Eingangsspannung des Schaltkreises 5
$U_A$    Versorgungsspannung für Feldgerät 2
$U_{A1}$    geregelte Betriebsspannung
$U_{A2}$    weitere Betriebsspannung
$U_{OP}$    Betriebsspannung des Operationsverstärkers OP
$U_{Ref}$    Referenzspannung

V1, V2    Spannungsausgänge des Schaltkreises 5
$V_{Bus}$, $V^-_{Bus}$    pos./neg. Potential der Feldbusspannung

Z1 - Z4    Z-Dioden, bzw. Referenz-Dioden

**Patentansprüche**

1. Busanschaltung (1) zur Ankopplung eines Feldgerätes (2) an einen Feldbus (3), wobei die Busanschaltung (1) einen Schaltkreis (5) zum Senden und Empfangen von Datenbussignalen (RxD, TxD, TRS) sowie zur Erzeugung von wenigstens einer geregelten Betriebsspannung ($U_{A1}$) aufweist, und die geregelte Betriebsspannung ($U_{A1}$) aus einer den Feldbus (3) versorgenden Busspannung ($U_{Bus}$) erzeugt wird, **dadurch gekennzeichnet, dass** ein steuerbarer Widerstand (T1) zur Erzeugung einer weiteren Betriebsspannung ($U_{A2}$) vorgesehen ist, dass Schaltungsmittel (OP, R1, R2, R3, R5, Z1, Z2) vorgesehen sind, die den steuerbaren Widerstand (T1) in Abhängigkeit der Busspannung ($U_{Bus}$) derart ansteuern, dass die Eingangsspannung ($U_E$) des Schaltkreises (5) auf dessen mindestens notwendige Versorgungspannung geregelt wird, und dass dem Feldgerät (2) die Summe aus der geregelten Betriebsspannung ($U_{A1}$) und der weiteren Betriebsspannung ($U_{A2}$) als Versorgungsspannung ($U_A$) zugeführt wird.

2. Busanschaltung (1) nach Anspruch 1, **dadurch gekennzeichnet, dass** als Schaltungsmittel ein Operationsverstärker (OP) vorgesehen ist, dem eine aus der Busspannung ($U_{Bus}$) abgeleitete Referenzspannung ($U_{Ref}$) zugeführt wird.

3. Busanschaltung (1) nach Anspruch 2, **dadurch gekennzeichnet, dass** sich die Referenzspannung ($U_{Ref}$) auf ein Potential ($V^+_{Bus}$) der Busspannung ($U_{Bus}$) bezieht.

4. Busanschaltung (1) nach Anspruch 2, **dadurch gekennzeichnet, dass** sich die Referenzspannung ($U_{Ref}$) auf das Bezugspotential (GND5) des Schaltkreises (5) bezieht.

5. Busanschaltung (1) nach einem der Ansprüche 2 bis 4, **dadurch gekennzeichnet, dass** die Referenzspannung ($U_{Ref}$) an einer Z-Diode (Z1, Z2) bereitgestellt wird, die mit einem Vorwiderstand (R3, R5) in Reihe geschaltet ist.

6. Busanschaltung (1) nach einem der Ansprüche 2 oder 5, **dadurch gekennzeichnet, dass** Schaltungsmittel (R4, Z4) zur Begrenzung der Betriebsspannung ($U_{OP}$) des Operationsverstärkers (OP) vorgesehen sind.

7. Busanschaltung (1) nach einem der vorangehenden Ansprüche, **dadurch gekennzeichnet, dass**

ein Bipolartransistor (T1) als steuerbarer Widerstand vorgesehen ist.

8. Busanschaltung (1) nach einem der Ansprüche 1 bis 6, **dadurch gekennzeichnet, dass** ein Feldeffekttransistor (T1) als steuerbarer Widerstand vorgesehen ist.

9. Busanschaltung (1) nach einem der vorangehenden Ansprüche, **dadurch gekennzeichnet, dass** zur Begrenzung der weiteren Ausgangsspannung ($U_{A2}$) ein Schaltungsmittel (Z3), vorzugsweise eine Z-Diode vorgesehen ist.

10. Busanschaltung (1) nach einem der vorangehenden Ansprüche, **dadurch gekennzeichnet, dass** das Feldgerät (2) einen Digitalteil (10, 11, 12, 13) und einen Sensorteil (6) umfasst.

11. Busanschaltung (1) nach Anspruch 10, **dadurch gekennzeichnet, dass** dem Sensorteil (6) die Summe aus der geregelten Betriebsspannung ($U_{A1}$) und der weiteren Betriebsspannung ($U_{A2}$) als Versorgungsspannung ($U_A$) zugeführt wird.

12. Busanschaltung (1) nach Anspruch 10 oder 11, **dadurch gekennzeichnet, dass** der Digitalteil des Feldgerätes (2) einen Pegelwandler (10) und einen Step-Down-Wandler (13) umfasst, denen die Summe aus der geregelten Betriebsspannung ($U_{A1}$) und der weiteren Betriebsspannung ($U_{A2}$) als die Versorgungsspannung ($U_A$) zugeführt wird.

**Claims**

1. A bus interface (1) for coupling a field device (2) to a field bus (3), wherein the bus interface (1) has a circuit (5) for sending and receiving data bus signals (RxD, TxD, TRS) and for producing at least one regulated operating voltage ($U_{A1}$) and the regulated operating voltage ($U_{A1}$) is produced from a bus voltage ($U_{Bus}$) supplying the field bus (3), **characterized in that** a controllable resistor (T1) for producing a further operating voltage ($U_{A2}$) is provided, circuitry means (OP, R1, R2, R3, R5, Z1, Z2) are provided which actuate the controllable resistor (T1) in a manner dependent upon the bus voltage ($U_{Bus}$) in such a way that the input voltage ($U_E$) of the circuit (5) is regulated to the at least necessary supply voltage thereof, and the sum of the regulated operating voltage ($U_{A1}$) and the further operating voltage ($U_{A2}$) is fed as a supply voltage ($U_A$) to the field device (2).

**2.** A bus interface (1) according to claim 1, **characterized in that** the circuitry means provided is in the form of an operation amplifier (OP) to which a reference voltage ($U_{Ref}$) derived from the bus voltage ($U_{Bus}$) is supplied.

**3.** A bus interface (1) according to claim 2, **characterized in that** the reference voltage ($U_{Ref}$) relates to a potential ($V^+_{Bus}$) of the bus voltage ($U_{Bus}$).

**4.** A bus interface (1) according to claim 2, **characterized in that** the reference voltage ($U_{Ref}$) relates to the reference potential (GND5) of the circuit (5).

**5.** A bus interface (1) according to any one of claims 2 to 4, **characterized in that** the reference voltage ($U_{Ref}$) is produced at a Z-diode (Z1, Z2) which is connected in series with a series resistor (R3, R5).

**6.** A bus interface (1) according to one of claims 2 or 5, **characterized in that** circuitry means (R4, Z4) are provided in order to limit the operating voltage ($U_{OP}$) of the operation amplifier (OP).

**7.** A bus interface (1) according to any one of the preceding claims, **characterized in that** a bipolar transistor (T1) is provided as a controllable resistor.

**8.** A bus interface (1) according to any one of claims 1 to 6, **characterized in that** a field effect transistor (T1) is provided as a controllable resistor.

**9.** A bus interface (1) according to any one of the preceding claims, **characterized in that** a circuitry means (Z3), preferably a Z-diode, is provided in order to limit the further output voltage ($U_{A2}$).

**10.** A bus interface (1) according to any one of the preceding claims, **characterized in that** the field appliance (2) comprises a digital part (10, 11, 12, 13) and a sensor part (6).

**11.** A bus interface (1) according to claim 10, **characterized in that** the sum of the regulated operating voltage ($U_{A1}$) and the further operating voltage ($U_{A2}$) is fed as a supply voltage ($U_A$) to the sensor part (6).

**12.** A bus interface (1) according to claim 10 or 11, **characterized in that** the digital part of the field appliance (2) comprises a level converter (10) and a step-down converter (13), to which the sum of the regulated operating voltage ($U_{A1}$) and the further' operating voltage ($U_{A2}$) is fed as a supply voltage ($U_A$).

**Revendications**

**1.** Raccordement de bus (1) pour le couplage d'un appareil de terrain (2) à un bus de terrain (3), dans lequel

le raccordement de bus (1) comporte un circuit (5) pour émettre et recevoir des signaux de bus de données (RxD, TxD, TRS) ainsi que pour générer au moins une tension de fonctionnement, régulée ($U_{A1}$), et

la tension de fonctionnement régulée ($U_{A1}$) est générée à partir de la tension de bus ($U_{Bus}$) alimentant le bus de terrain (3),

**caractérisé par**

- une résistance (T1), commandée pour générer une autre tension de fonctionnement ($U_{A2}$),
- des moyens de commutation (OP, R1, R2, R3, R5, Z1, Z2) commandant la résistance commandée (T1) en fonction de la tension de bus ($U_{Bus}$) de façon que la tension d'entrée ($U\varepsilon$) du circuit de commutation (5) soit régulée au moins sur la tension d'alimentation nécessaire, et
- l'appareil de terrain (2) reçoit comme tension d'alimentation ($U_A$), la somme de la tension de fonctionnement régulée ($U_{A1}$) et de l'autre tension de fonctionnement ($U_{A2}$).

**2.** Raccordement de bus (1) selon la revendication 1, **caractérisé en ce que**

le moyen de commutation est un amplificateur opérationnel (OP) recevant une tension de référence ($U_{Ref}$) déduite de la tension de bus ($U_{Bus}$).

**3.** Raccordement de bus (1) selon la revendication 2, **caractérisé en ce que**

la tension de référence ($U_{Ref}$) est rapportée à un potentiel ($V^+_{Bus}$) de la tension de bus ($U_{Bus}$).

**4.** Raccordement de bus (1) selon la revendication 2, **caractérisé en ce que**

la tension de référence ($U_{Ref}$) est rapportée au potentiel de référence (GND5) du circuit de commutation (5).

**5.** Raccordement de bus (1) selon l'une des revendications 2 à 4,

**caractérisé en ce que**

la tension de référence ($U_{Ref}$) est fournie par une diode Z (Z1, Z2) en série avec une résistance amont (R3, R5).

**6.** Raccordement de bus (1) selon l'une des revendications 2 ou 5,

**caractérisé par**

des moyens de commutation (R4, Z4) pour limiter la tension de fonctionnement ($U_{OP}$) de l'amplificateur opérationnel (OP).

**7.** Raccordement de bus (1) selon l'une des revendications précédentes,

**caractérisé en ce que**
la résistance commandée est un transistor bipolaire
(T1).

8.  Raccordement de bus (1) selon l'une des revendications 1 à 6,
    **caractérisé en ce que**
    la résistance commandée est un transistor à effet de
    champ (T1).

9.  Raccordement de bus (1) selon l'une des revendications précédentes,
    **caractérisé par**
    un moyen de commutation (Z3) de préférence une
    diode Zener pour limiter l'autre tension de sortie
    ($U_{A2}$).

10. Raccordement de bus (1) selon l'une des revendications précédentes,
    **caractérisé en ce que**
    l'appareil de terrain (2) comprend une partie numérique (10, 11, 12, 13) et une partie de capteur (6).

11. Raccordement de bus (1) selon la revendication 10,
    **caractérisé en ce que**
    la partie de capteur (6) reçoit comme tension d'alimentation ($U_A$), la somme de la tension de fonctionnement régulée ($U_{A1}$) et de l'autre tension de fonctionnement ($U_{A2}$).

12. Raccordement de bus (1) selon la revendication 10
    ou 11,
    **caractérisé en ce que**
    la partie numérique de l'appareil de terrain (2) comprend un transformateur de niveau (10) et un transformateur abaisseur (13) recevant comme tension
    d'alimentation ($U_A$), la somme de la tension de fonctionnement régulée ($U_{A1}$) et de l'autre tension de
    fonctionnement ($U_{A2}$).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008174178 A1
- WO 9604735 A